# DEMANDE DE BREVET EUROPEEN

(11) **EP 0 894 435 A1**
(43) Date de publication de la demande: **03.02.1999**
(21) Numéro de dépôt: 98401833.3
(22) Date de dépôt: 20.07.1998
(51) Int. Cl.: A01N 65/00

(54) **Composition anti-parasitaire traitante et préventive comprenant des agents pédiculicides et larvicides en association avec des huiles essentielles répulsives pour insectes.**

(30) Priorité: 25.07.1997 FR 9709526
(71) Demandeur: Laboratoire Gandhour, 94732 Nogent-sur-Marne Cedex (FR)
(72) Inventeur: Toupin, Jean-Jacques, 76620 Le Havre (FR)
(74) Mandataire: Casalonga, Axel

(57) **Abrégé**

Composition anti-parasitaire traitante et préventive, notamment contre les poux, comprenant une combinaison d'agents pédiculicides ou lenticides et d'agents larvicides complexée par l'association avec au moins deux huiles essentielles répulsives pour insectes choisies parmi les huiles essentielles de lavande, myrthe, citronnelle et jasmin, dans un support physiologiquement acceptable.

## Description

La présente invention concerne une composition anti-parasitaire traitante et préventive, notamment contre les poux, comprenant une combinaison d'agents pédiculicides et larvicides complexée par l'association avec des huiles essentielles répulsives pour insectes.

Il est bien connu que dans les écoles primaires, les enfants âgés notamment de 7 à 12 ans peuvent être atteints de pédiculose du cuir chevelu se traduisant par la présence de poux et de lentes. Les enfants non atteints de pédiculose peuvent le devenir rapidement au contact d'enfants porteurs de pédiculose. Or, le traitement de la pédiculose est contraignant dans la mesure où il demande du temps et doit être appliqué aux différents membres d'une même famille.

Par conséquent, la demanderesse a cherché à mettre au point une composition anti-parasitaire à la fois traitante et préventive notamment contre les poux, qui soit à la fois efficace, bien tolérée et facile à appliquer.

On connaît notamment des compositions efficaces contre les poux adultes et leurs oeufs ayant un effet répulsif sur les poux adultes contenant comme principe actif du pipéronal (WO-A-9009738 et FR-A-2.692.107). Cependant, ces compositions ne sont pas pédiculicides dans la mesure où le principe actif employé est en fait une huile essentielle répulsive odorante, mais ne détruit pas les poux mâles, les poux femelles et ne stérilise pas l'effet de fécondation dans l'oeuf.

La demanderesse a donc découvert avec surprise qu'en associant une combinaison d'agents pédiculicides ou lenticides et d'agents larvicides avec certaines huiles essentielles répulsives pour insectes, on pouvait obtenir une protection efficace et de longue durée contre l'infestation par les parasites et notamment les poux. De plus, une telle association, outre son efficacité, présente l'avantage d'être bien tolérée et d'avoir une odeur agréable.

La présente invention a donc pour objet une composition anti-parasitaire traitante et préventive contenant une combinaison d'au moins un agent pédiculicide ou lenticide et au moins d'un agent larvicide complexée par l'association avec au moins deux huiles essentielles répulsives pour insectes choisies parmi les huiles essentielles de lavande, myrthe, citronnelle et jasmin, dans un support physiologiquement acceptable.

La composition anti-parasitaire selon l'invention contient généralement environ 0,5 à 1,2 % en poids d'un ou plusieurs agents pédiculicides ou lenticides, environ 0,2 à 0,6 % en poids d'agent larvicide et environ 0,6 % à 6 % en poids d'au moins deux huiles essentielles choisies parmi les huiles essentielles de lavande, myrthe, citronnelle et jasmin.

Parmi les agents pédiculicides et lenticides, on peut citer les composés organo-chlorés comme le DDT (chlorfénotane) et l'hexachlorocyclohexane (lindane), les composés organo-phosphorés comme le malathion, les carbamates, les extraits de plantes comme la pyrèthre ou le chrysanthème, les pyréthrinoïdes de synthèse (D-phénotrine, alléthrine, deltaméthrines ou décaméthrines).

A titre d'agents larvicides, on peut citer principalement le méthoprène, qui a à la fois une action larvicide, ovicide et stérilisante.

Parmi les huiles essentielles utilisées, on préfère les huiles essentielles de myrthe et de citronnelle, myrthe et jasmin ou myrthe et lavande.

La composition selon l'invention contient également de préférence du pipéronal, qui est une huile essentielle répulsive en une concentration de 0,1 à 1 % en poids, et préférentiellement en une concentration de 0,2 à 0,5 %, sur la base du poids total de la composition. Le pipéronal est une huile essentielle extraite de la spirée ulmaire.

Selon un mode de réalisation préféré, la composition selon l'invention contient en outre 0,2 à 2 % en poids d'un agent anti-oxydant qui est de préférence choisi parmi le butyl hydroxyanisole et l'α-tocophérol sous forme de D-α-tocophérol, L-α-tocophérol ou DL-α-tocophérol.

Les compositions anti-parasitaires selon l'invention peuvent se trouver sous forme de lotion-gel, de lotion alcoolique, de crème ou de baume après-shampooing.

La forme préférée selon l'invention est une lotion-gel pouvant contenir, en plus des principes actifs précédemment énumérés, un alcool usuel tel que de l'alcool éthylique, un polyol tel que le propylène glycol, de la glycérine, des épaississants et de l'eau.

Les épaississants utilisés peuvent être des alginates, des Carbopols (acides polyacryliques réticulés) ou de la gomme guar et sont utilisés en une quantité de 0,2 à 1,6 % en poids, sur la base du poids total de la composition.

La composition anti-parasitaire selon l'invention sous forme de lotion-gel comprend préférentiellement, dans un support physiologiquement acceptable, 0,2 à 0,5 % en poids de D-phénothrine à titre d'agent pédiculicide, 0,3 à 0,6 % en poids de malathion à titre d'agent pédiculicide, 0,2 à 0,6 % en poids de méthoprène à titre d'agent larvicide, 0,1 à 1 % en poids de pipéronal, 0,8 à 2 % en poids de butoxyde de pipéronyle, 0,2 à 2 % en poids d'α-tocophérol, 0,3 à 2 % en poids d'huile essentielle de myrthe et 0,3 à 2 % en poids d'huile essentielle de citronnelle, jasmin ou lavande.

La lotion-gel selon l'invention est de préférence lavée avec un shampooing répulsif pouvant contenir un tensio-actif anionique en une quantité de 10 à 25 % en poids choisi parmi les alkyléthers sulfates, les lipo-aminoacides et le lauroylpolyglucose, un tensio-actif amphotère en une quantité de 0,5 à 2 % en poids tel que le TWEEN 80 (esters-éthers polyéthoxylés du sorbitane), des adoucissants en une quantité de 0,1 à 3 % en poids, par exemple l'enoxolone ou acide glycérhétinique, les cires de lanoline, les huiles de vison, les huiles de poisson, l'alcool cétyl stéarylique, les acides oléique, linoléique et linolénique et les mêmes huiles essentielles répulsives que la lotion-gel ci-dessus, à savoir 0,6 à 6 % en poids d'au moins deux huiles essentielles choisies parmi la myrthe et la citronnelle, la lavande ou le jasmin, ainsi qu'éventuellement 0,1 à 1 % en poids de pipéronal.

L'invention a également pour objet un procédé de prévention et traitement des parasites et notamment des poux consistant à appliquer sur les cheveux et le cuir chevelu pendant une duréc de 1 à 5 minutes la lotion-gel ci-dessus définie, puis à l'éliminer avec un shampooing répulsif comprenant 10 à 25 % en poids de tensio-actifs anioniques, éventuellement 0,5 à 2 % en poids de tensio-actifs amphotères, éventuellement 0,1 à 1,5 % en poids d'adoucissants et 0,6 à 6 % en poids d'au moins deux huiles essentielles choisies parmi les huiles essentielles de myrthe et de citronnelle, jasmin ou lavande, dans un support cosmétiquement acceptable, puis à rincer abondamment les cheveux et le cuir chevelu. Préférentiellement, la durée d'application de la lotion-gel est de 3 minutes.

Lorsqu'elle est utilisée sous forme de lotion alcoolique, la composition anti-parasitaire selon l'invention contient de l'eau, 60 % en volume d'alcool tel que l'alcool éthylique et les principes actifs ci-dessus définis. Il n'est pas nécessaire de rincer cette lotion alcoolique ; néanmoins, un rinçage avec un shampooing répulsif, tel que défini ci-dessus, permet de renforcer les effets du traitement.

Lorsque la composition anti-parasitaire selon l'invention se présente sous forme de crème, elle contient le support généralement utilisé pour ce type d'émulsion comprenant de l'eau et des émulsifiants classiques. Il n'est pas nécessaire de rincer cette crème ; néanmoins, un rinçage avec un shampooing répulsif, tel que défini ci-dessus. permet de renforcer les effets du traitement.

Le baume après-shampooing selon l'invention contient en plus des principes actifs ci-dessus définis, un tensio-actif cationique tel qu'un dérivé d'ammonium quaternaire et des alkylamides de coprah. Ce baume après-shampooing est simplement rincé à l'eau.

Selon une forme de réalisation préférée de l'invention, la composition anti-parasitaire se trouve sous forme de crème ou de lotion-gel contenant les principes actifs ci-dessus mentionnés dans des nanosphères.

L'invention a également pour objet l'utilisation pour la fabrication d'une composition anti-parasitaire destinée à la prévention et au traitement des poux chez l'homme, d'une combinaison d'au moins un agent pédiculicide ou lenticide et d'au moins un agent larvicide complexée par l'association avec au moins deux huiles essentielles répulsives pour insectes choisies parmi les huiles essentielles de lavande, myrthe, citronnelle et jasmin, dans un support physiologiquement acceptable.

L'invention sera mieux illustrée par les exemples suivants :

### Exemple 1 - Lotion-gel anti-parasitaire

| | |
|---|---|
| D - phénotrine | 0,3 g |
| Butoxyde de pipéronyle | 1,2 g |
| Malathion | 0,5 g |
| Méthoprène | 0,4 g |
| Pipéronal | 0,5 g |
| Huile essentielle de myrthe | 0,5 g |
| Huile essentielle de citronnelle | 0,5 g |
| Carbopol 940 | 1,5 g |
| Glycérine | 1 g |
| DL-α-tocophérol | 2 g |
| Propylène glycol | 50 g |
| Alcool éthylique | 30 g |
| Eau q.s. p. | 100 g |

Après application sur les cheveux et le cuir chevelu pendant 3 minutes, cette lotion-gel est lavée avec un shampooing répulsif de composition suivante :

| | |
|---|---|
| Lauroyl polyglucose | 20 g |
| Enoxolone | 2 g |
| Glycérine | 1 g |
| Pipéronal | 0,5 g |
| Huile essentielle de myrthe | 0,5 g |
| Huile essentielle de citronnelle | 0,5 g |
| TWEEN 80 | 1,2 g |
| Eau q.s.p. | 100 g |

puis rincée à l'eau.

### Exemple 2 - Lotion alcoolique anti-parasitaire

| | |
|---|---|
| Butoxyde de pipéronyle | 1,2 g |
| D-phénothrine | 0,3 g |
| Malathion | 0,5 g |
| Méthroprène | 0,4 g |
| Pipéronal | 0,2 g |
| Huile essentielle de myrthe | 0,5 g |
| Huile essentielle de citronnelle | 0,5 g |
| TWEEN 80 | 1,2 g |
| DL-α-tocophérol | 2 g |
| Alcool 95 % q.s.p. pour | 60 % Vol. |
| Eau q.s.p. | 100 g |

### Exemple 3 - Crème anti-parasitaire

| **A** | |
|---|---|
| Polyéthylène glycol -6- stéarate | 6 g |
| Alcool cétylique, ceteth - 20 et steareth - 20 | 6 g |
| Huile de palme hydrogénée, glycérides et glycérides d'huile de palme hydrogénée | 4 g |
| Isostéarate d'isostéaryle | 4 g |
| | |

| **B** | |
|---|---|
| Propylène glycol | 5 g |
| Butoxyde de pipéronyle | 1,2 g |
| D-phénothrine | 0,3 g |
| Malathion | 0,5 g |
| Méthoprène | 0,2 g |
| Para-hydroxybenzoate de méthyle | 0,3 g |
| Pipéronal | 0.2 g |
| Huile essentielle de myrthe | 0.5 g |
| Huile essentielle de citronnelle | 0.5 g |
| NaOH (solution à 10 %) q.s. | |
| Acide lactique q.s.p. pH = 5,5 | |
| Eau q.s.p. | 100 g |

### Exemple 4 - Baume anti-parasitaire après shampooing

| | |
|---|---|
| Triton X 400 (tensio-actif cationique) | 7 g |
| Monostéarate de glycéryle | 2 g |
| Céraphyl 28 (émollient) | 1 g |
| Gafquat 755 N (polymère cationique) | 2 g |
| Glutaraldéhyde à 25 % | 0,4 g |
| NaCl (solution à 10 %) | 0,3 g |
| D-phénothrine | 0,3 g |
| Butoxyde de pipéronyle | 1,2 g |
| Malathion | 0,5 g |
| Méthoprène | 0,4 g |
| Pipéronal | 0,2 g |
| Huile essentielle de myrthe | 0,5 g |
| Huile essentielle de citronnelle | 0,5 g |
| TWEEN 80 q.s.p. pour dissoudre | |
| Eau distillée q.s.p. | 100 g |

## Revendications

1. Composition anti-parasitaire traitante et préventive, notamment contre les poux, comprenant une combinaison d'au moins un agent pédiculicide ou lenticide et d'au moins un agent larvicide complexée par l'association avec au moins deux huiles essentielles répulsives pour insectes choisies parmi les huiles essentielles de lavande, myrthe, citronnelle et jasmin, dans un support physiologiquement acceptable.

2. Composition anti-parasitaire selon la revendication 1, caractérisée par le fait qu'elle contient 0,5 à 1,2 % en poids d'agents pédiculicides ou lenticides, 0,2 à 0,6 % en poids d'agents larvicides, 0,6 à 6 % en poids d'au moins deux huiles essentielles choisies parmi les huiles essentielles de lavande, myrthe, citronnelle et jasmin, dans un support physiologiquement acceptable.

3. Composition anti-parasitaire selon la revendication 1 ou 2, caractérisée par le fait qu'elle contient en outre 0,1 à 1% en poids de pipéronal.

4. Composition anti-parasitaire selon l'une quelconque des revendications précédentes, caractérisée par le fait qu'elle contient en outre 0,2 à 2 % en poids d'un agent anti-oxydant.

5. Composition anti-parasitaire selon la revendication 4, caractérisée par le fait que l'agent anti-oxydant est choisi parmi le butyl hydroxyanisole, le D-α-tocophérol, le L-α-tocophérol et le DL-α-tocophérol.

6. Composition anti-parasitaire selon l'une quelconque des revendications précédentes, caractérisée par le fait que les agents pédiculicides ou lenticides sont choisis parmi les composés organo-chlorés tels que le DDT (chlorfénotane) et l'hexachlorocyclohexane (lindane), les composés organo-phosphorés tels que le malathion, les carbamates, les extraits de plantes, par exemple de pyrèthre ou chrysanthème, les pyréthrinoïdes de synthèse tels que la D-phénotrine, l'alléthrine, les deltaméthrines et les décaméthrines.

7. Composition anti-parasitaire selon l'une quelconque des revendications précédentes, caractérisée par le fait que l'agent larvicide est le méthoprène.

8. Composition anti-parasitaire selon l'une quelconque des revendications précédentes, caractérisée par le fait que les huiles essentielles sont les huiles essentielles de myrthe et de citronnelle, myrthe et jasmin ou myrthe et lavande.

9. Composition anti-parasitaire selon l'une quelconque des revendications précédentes, caractérisée par le fait qu'elle se présente sous forme de lotion-gel, lotion alcoolique, crème ou baume après shampooing.

10. Composition anti-parasitaire selon la revendication 9, caractérisée par le fait qu'elle se présente sous forme de lotion-gel comprenant, dans un support physiologiquement acceptable, 0,2 à 0,5 % en poids de D-phénothrine à titre d'agent pédiculicide, 0,3 à 0,6 % en poids de malathion à titre d'agent pédiculicide, 0,2 à 0,6 % en poids de méthoprène à titre d'agent larvicide, 0,1 à 1 % en poids de pipéronal, 0,8 à 2 % en poids de butoxyde de pipéronyle, 0,2 à 2 % en poids d'α-tocophérol, 0,2 à 1,6 % en poids d'épaississant, 0,3 à 2 % en poids d'huile essentielle de myrthe et 0,3 à 2 % en poids d'huile essentielle de citronnelle, jasmin ou lavande.

11. Composition anti-parasitaire selon les revendications 9 et 10, caractérisée par le fait qu'elle se présente sous forme de crème ou de lotion-gel contenant les principes actifs pédiculicides ou lenticides, larvicides et les huiles essentielles dans des nanosphères.

12. Procédé de prévention et traitement des parasites et notamment des poux, caractérisé par le fait qu'il consiste à appliquer sur les cheveux et le cuir chevelu pendant une durée de 1 à 5 minutes la lotion-gel selon la revendication 10, puis à l'éliminer avec un shampooing répulsif comprenant 10 à 25 % en poids de tensio-actifs anioniques, éventuellement 0,5 à 2 % en poids de tensio-actifs amphotères, éventuellement 0,1 à 3 % en poids d'adoucissants et 0,6 à 6 % en poids d'au moins deux huiles essentielles choisies parmi les huiles essentielles de myrthe et de citronnelle, jasmin ou lavande, dans un support cosmétiquement acceptable, puis à rincer abondamment les cheveux et le cuir chevelu.

13. Utilisation pour la fabrication d'une composition anti-parasitaire destinée à la prévention et au traitement des poux chez l'homme, d'une combinaison d'au moins un agent pédiculicide ou lenticide et d'au moins un agent larvicide complexée par l'association avec au moins deux huiles essentielles répulsives pour insectes choisies parmi les huiles essentielles de lavande, myrthe, citronnelle et jasmin, dans un support physiologiquement acceptable.
